# EUROPEAN PATENT SPECIFICATION

(11) **EP 3 294 069 B1**
(45) Date of publication and mention of the grant of the patent: **24.04.2024**
(21) Application number: 16793400.9
(22) Date of filing: 11.05.2016
(51) Int. Cl.: A23L 2/04, A23N 1/00, A47J 19/00, B30B 9/04, B30B 9/26, G01N 33/00, B30B 9/02, B30B 9/06

(54) **PATHOLOGIC STAGING COMPRESSION APPARATUS AND METHODS**
VORRICHTUNG UND VERFAHREN ZUR KOMPRESSION PATHOLOGISCHER EINSTUFUNGEN
PROCÉDÉS ET APPAREIL DE COMPRESSION DE STADIFICATION PATHOLOGIQUE

(30) Priority: 12.05.2015 US 201562160003 P
(43) Date of publication of application: 21.03.2018
(73) Proprietor: Parker Isaac Instruments, LLC, Ithaca, New York 14850 (US)
(72) Inventor: STERN, Charles, Ithaca, New York 14850 (US); BODELL, Alex, Ithaca, New York 14850 (US)
(74) Representative: Gill Jennings & Every LLP
(86) International application number: PCT/US2016/031743
(87) International publication number: WO 2016/183135

(56) References cited:
- WO-A1-2011/125938
- US-A- 2 419 545
- US-A- 3 682 092
- US-A- 4 050 373
- US-A- 4 263 330
- US-A- 4 347 137
- US-A- 4 713 344
- US-A- 4 744 926
- US-A- 4 953 109
- US-A- 5 383 263
- US-A1- 2003 021 736
- US-A1- 2007 033 731
- US-A1- 2009 221 075
- US-A1- 2009 293 742
- US-A1- 2013 158 515
- US-B2- 7 517 495
- LAVY RON ET AL: "A comparative study on two different pathological methods to retrieve lymph nodes following gastrectomy", INTERNATIONAL JOURNAL OF SURGERY, vol. 12, no. 7, 20 May 2014 (2014-05-20), pages 725-728, XP028873073, ISSN: 1743-9191, DOI: 10.1016/J.IJSU.2014.05.057
- Gehoff et al.: "Optimal Lymph Node Harvest in Rectal Cancer (UICC Stages II and III) after Preoperative 5-FU-based Radiochemotherapy. Acetone Compression is a New and Highly Efficient Method", AMERICAN JOURNAL OF SURGICAL PATHOLOGY, vol. 36, no. 2 1 February 2012 (2012-02-01), pages 202-213, XP009540418, Retrieved from the Internet: URL:https://journals.lww.com/ajsp/Abstract /2012/02000/Optimal_Lymph_Node_Harvest_in_ Rectal_Cancer__UICC.5.aspx [retrieved on 2022-11-09]

## Description

### REFERENCE TO RELATED APPLICATIONS

This application claims one or more inventions which were disclosed in Provisional Application Number 62/160,003, filed May 12, 2015, entitled "PATHOLOGIC STAGING COMPRESSION APPARATUS AND METHODS".

### BACKGROUND OF THE INVENTION

### FIELD OF THE INVENTION

The invention pertains to the field of pathologic staging. More particularly, the invention pertains to methods for preparing a biological sample for pathologic staging.

### DESCRIPTION OF RELATED ART

The pathologic stage is an essential piece of diagnostic information which is used to determine a cancer patient's prognosis and treatment, including whether or not the patient will receive chemotherapy.

To determine the pathologic stage of colorectal cancer, the surgeon first resects a section of fatty tissue from the patient's abdomen. This fatty tissue is then sent to the surgical pathologist, whose responsibility is to determine the stage of the illness based on the extent of cancer observed within this tissue. Importantly, the pathologist is not interested in the fat itself, but rather in the fibrous tissue and lymph nodes that are contained within the fatty tissue.

Conventionally, the pathologist meticulously dissects the fatty tissue with a scalpel in search of fibrous material and lymph nodes. The pathologist removes any clearly visible nodes or other relevant fibrous tissue for examination under the microscope. Inevitably, however, some very small or microscopic pieces of tissue are left behind, but the presence or absence of any diagnostically relevant information (which may be microscopic) within the resected tissue may change the patient's prognosis and treatment. To account for this, the pathologist conventionally selects five to ten random samples from the tissue for microscopic study.

In recent years, a team of pathologists in Germany has pioneered a technique that makes this process both more efficient and more accurate (see, for example, Gehoff et al., Am. J. Surg. Pathol., Vol. 36, pp. 202-213, 2012; Basten et al., Pathologe, Vol. 31, pp. 218-224, 2010; and Scheel et al., "Comprehensive lymph node morphometry in rectal cancer using acetone compression", J. Clin. Pathol., e-published March 16, 2015). Referred to as the "acetone compression method" (ACM), this method allows the pathologist to eliminate the time-consuming dissection process while simultaneously avoiding the risk of missing diagnostically relevant tissue.

In brief, the methodology is as follows:
1. When the pathologist receives the resected fatty tissue in the laboratory, he/she first examines it for any large and clearly-visible pieces of diagnostically-relevant tissue.
2. The pathologist then slices the sample into small (2 to 3 mm) sections and puts this material in acetone to soak overnight. Acetone dissolves lipids without affecting the integrity of fibrous tissue.
3. The following day, the tissue is removed from the acetone bath and loaded into a specialized tube that is perforated with small (1 to 2 mm diameter) holes.
4. An arbor press, which is a mechanical device using a rack and pinion gear to exert a linear force, is then used to compress the sample in the tube. Compressing the sample forces the fatty components to be extruded out of the small holes in the tube.
5. After compression is complete, the only portions of the original sample remaining within the tube are the fibrous components of that tissue. The pathologist has therefore eliminated all diagnostically irrelevant information, i.e. fat, from the tissue sample.

ACM represents a more time-efficient approach for processing the tissue than conventional hand dissection. In addition, ACM eliminates the risk that the pathologist may overlook diagnostically relevant information, therefore increasing the accuracy of the pathologic staging process for cancers of this type.

Lymph nodes are usually the first organs invaded by malignant cells when they metastasize from the primary tumor site. The determination of the presence or absence of metastases in local lymph nodes is critical in determining the prognosis and treatment of the patient. ACM is capable of providing double or even quadruple the number of lymph nodes, compared to the conventional technique of tedious dissection. Not only does ACM relieve the pathologist of most of this dissection, it does a better job by allowing the fat to be processed in an economical and practical manner.

The above-mentioned references are hereby incorporated by reference herein.

The publication by R. Lavy et al., "A comparative study on two different pathological methods to retrieve lymph nodes following gastrectomy", Int J. Surg, Vol. 12, pp. 725-725, 2014, compares two different techniques for harvesting lymph nodes. The first technique was manual dissection following formalin fixation and the second was fat clearing by acetone.

The document US 2009/0221075 A1 discloses a system to separate, enrich, and/or purify a cellular population from a biological tissue, such as a tissue sample. For example, an adipose tissue sample can be acquired and disrupted. The disrupted tissue sample can then be separated and purified. The separated components can include multipotent, pluripotent, or other cell populations.

The document US 2013/0158515 A1 discloses an invention which relates to systems and apparatuses for improving quality and viability of biological material, such as harvested adipose cells, stem cells, or other cells or biological components, by treatment of the biological material with membrane-repairing/stabilizing agents or the like and/or mechanical removal of components, such as impurities and/or excess treatment agents. The disclosed invention further relates to systems and apparatuses for transplanting tissue, such as adipose tissue.

Gehoff et al.: "Optimal Lymph Node Harvest in Rectal Cancer (UICC Stages II and III) after Preoperative 5-FU-based Radiochemotherapy. Acetone Compression is a New and Highly Efficient Method", published in the AMERICAN JOURNAL OF SURGICAL PATHOLOGY, vol. 36, no. 21 February 2012 (2012-02-01), pages 202-213, discloses an ACM method using a pathologic staging compression device comprising a compression tube having a plurality of through-holes, whereby the method comprises the steps of soaking the tissue sample in acetone to dissolve fat from the sample and compressing said sample in the compression tube of the pathologic staging compression device.

### SUMMARY OF THE INVENTION

The invention is defined in appended method claim 1 and use claim 11.

According to the invention, a pathologic staging compression device prepares a biological sample for pathologic staging by compressing the sample to remove liquid fat from the sample. In one embodiment, the apparatus preferably includes a compression tube with flange and a clamping plate to stabilize and align the compression tube, a fat containment and drainage system, a gauge to monitor the extrusion force, use of hydraulic pressure to generate the extrusion force for sample compression, and integrated ejection of the compressed sample and plunger.

In another embodiment, the apparatus includes a compression tube, and preferably a drainage planum to hold and align the compression tube, a fat containment and drainage system, a gauge to monitor the extrusion force, use of hydraulic pressure to generate the extrusion force for sample compression, and ejection of the compressed sample after the compression tube has been removed from the drainage planum.

### BRIEF DESCRIPTION OF THE DRAWINGS

- Fig. 1: shows an isometric view of a pathologic staging compression apparatus in an embodiment of the present invention.
- Fig. 2: shows a front view of the pathologic staging compression apparatus of Fig. 1.
- Fig. 3: shows a side view of the pathologic staging compression apparatus of Fig. 1.
- Fig. 4: shows an isometric view of the compression assembly of the pathologic staging compression apparatus of Fig. 1.
- Fig. 5: shows a front view of the compression assembly of Fig. 4.
- Fig. 6: shows a side view of the compression assembly of Fig. 4.
- Fig. 7: shows an exploded view of the compression assembly of Fig. 4.
- Fig. 8: shows an exploded view of the fat containment and drainage sub-assembly of the pathologic staging compression apparatus of Fig. 1.
- Fig. 9: shows an exploded view of the compression tube sub-assembly of the pathologic staging compression apparatus of Fig. 1.
- Fig. 10: shows an exploded view of the riser plate sub-assembly of the pathologic staging compression apparatus of Fig. 1.
- Fig. 11: shows an isometric view of the compression tube of the pathologic staging compression apparatus of Fig. 1.
- Fig. 12: shows a side view of the compression tube of Fig. 11.
- Fig. 13: shows a cross sectional view of the fat containment and drainage system of the pathologic staging compression apparatus of Fig. 1.
- Fig. 14: shows a partial cross sectional view of the compression system of the pathologic staging compression apparatus of Fig. 1.
- Fig. 15: shows another embodiment of a pathologic staging compression apparatus.
- Fig. 16: shows a front view of the pathologic staging compression apparatus of Fig. 15.
- Fig. 17: shows a side view of the pathologic staging compression apparatus of Fig. 15.
- Fig. 18A: shows a view of the removable drainage planum in the compression assembly.
- Fig. 18B: shows a top view of the removable drainage planum in the compression assembly.
- Fig. 18C: shows a drainage plug that may be used in combination with the drainage planum of Figs. 18A and 18B.
- Fig. 19: shows the compression tube and the removable drainage planum.
- Fig. 20: shows a hand plunger to be used with the apparatus.
- Fig. 21: shows an assembly of the hand plunger and compression tube on the bottom plug.
- Fig. 22: shows the pathologic staging compression apparatus with the drainage planum in an embodiment of the invention.
- Fig. 23A: shows detail of the magnet and pins from circle 23 of Fig. 22.
- Fig. 23B: shows detail of the magnet and pins from circle 23 of Fig. 22.
- Fig. 24A: shows an embodiment with a mesh filter/disk and a compression tube.
- Fig. 24B: shows a top view of the embodiment of Fig. 24A.
- Fig. 24C: shows another view of the embodiment of Fig. 24A.
- Fig. 25: shows a mesh/disk filter. Perforation size of the mesh disk may vary.
- Fig. 26: shows an embodiment with a mesh sleeve or bag and a compression tube. Perforation size of the mesh sleeve or bag may vary.
- Fig. 27A: shows a view of the mesh sleeve or bag of Fig. 26, which may include a mesh base.
- Fig. 27B: shows another view of the mesh sleeve or bag of Fig. 26.
- Fig. 28A: shows a compression tube with a 8 x20 hole pattern.
- Fig. 28B: shows a compression tube with a 1 x 20 slot pattern.
- Fig. 28C: shows a compression tube with a 1 x 14 spiral pattern.
- Fig. 28D: shows a compression tube with no perforations which is not used in the method of the invention.
- Fig. 29: shows a block diagram of an example of an automated control system for the compression device.
- Fig. 30: shows a flow diagram of a use cycle of an automated control system for the compression device.

### DETAILED DESCRIPTION OF THE INVENTION

Although the acetone compression method (ACM) was initially described for colon carcinomas, it may be useful in other cancer situations as well, where there is a need to examine fat for evidence of lymph nodes or microscopic deposits of tumor, such as a resected omentum in certain cases of gynecological malignancies. In preliminary testing of a pathologic staging compression apparatus of the present invention, the apparatus was found to be useful in preparing samples for pathologic staging of ovarian cancer in addition to colorectal cancer. In addition to simplifying lymph node examination for various surgical cancer specimens, ACM standardizes and dramatically increases the sensitivity of the pathologic staging process.

A pathologic staging compression apparatus preferably allows surgical pathologists to determine the pathologic stage of certain cancers, including, but not limited to, colorectal, breast, sarcoma, soft tissue and ovarian cancers, with greater accuracy and efficiency than is possible with conventional methods and apparatus. The compression apparatus may be used to pathologically stage any cancer where fatty tissue is present. Use of this apparatus as part of ACM preferably provides higher quality samples for pathologic staging. Any resected fatty tissue mass, human or animal, which is sent to a pathologist may utilize acetone treatment and the compression apparatuses described herein.

The pathologic stage, an essential piece of diagnostic information, is used to determine a cancer patient's prognosis and treatment, including whether or not the patient will receive chemotherapy. Better pathologic staging can help a clinician determine the best chemotherapy dosage for each individual patient. A directed, specific and measured dose of chemotherapy can be individually tailored to the patient based on the diagnostic result indicated in pathologic staging.

Replicating the published ACM as it was described in the literature resulted in the method working as described in the published literature. Many key areas for improving the process were noted, however, from an ease-of-use, safety, accuracy, reliability, and standardization standpoint. A pathologic staging compression apparatus was developed as a result of deficiencies in the prior art apparatus.

A pathologic staging compression apparatus preferably includes a tube flange and a clamping plate for stabilization and alignment of the compression tube, a fat containment and drainage system, monitoring of the extrusion force being applied, use of hydraulic force for generation of the extrusion force for sample compression, and integrated ejection of the sample and plunger as improvements to the prior art apparatus. Being able to measure and monitor the extrusion pressure or extrusion force is essential to standardizing sample processing.

A pathologic staging compression apparatus preferably allows surgical pathologists to perform ACM with greater ease, safety, accuracy, reliability, and replicability than the prior art device described in the academic literature.

In a preferred embodiment, a frame of the pathologic staging compression apparatus supports a hydraulic ram held in alignment with the compression tube of a compression assembly on the frame. A pressure gauge/sensor measures the pressure of the hydraulic fluid being used to actuate the hydraulic ram. A measurement of the force exerted onto the tissue sample can be extrapolated from this value. The compression tube is mounted on a clamping plate between two flanges on the compression tube. The compression tube includes an array of small through-holes through the cylindrical wall of the compression tube. The clamping plate aligns the compression tube with the hydraulic ram and prevents movement of the compression tube during a compression cycle. The clamping plate is mounted onto a riser plate by way of a pair of thumb nuts. The riser plate is mounted to the frame.

In a preferred method of preparing a tissue sample for pathologic staging, the tissue sample presoaked in acetone is placed in the compression tube with the bottom plug press-fit into the bottom of the compression tube. According to the invention, a shield is mounted around the compression tube as part of a liquid fat containment system. The compression tube is mounted onto the clamping plates and the plunger is placed on top of the compression tube. Slots in the clamping plates allow the clamping plates to slide between an engaged position and a retracted position. In the engaged position, the clamping plates are slid firmly against the exterior diameter of the compression tube and the thumb nuts are tightened. In the retracted position, the compression plates, slidable when the thumb nuts are loosened, are slid laterally away from the compression tube. In the course of a single operation cycle, the operator places the compression tube on top of the riser plate with the clamping plates in the retracted position. The operator then slides the clamping plates towards the compression tube until they are firmly pressed against the exterior diameter of the compression tube before locking the thumb nuts. This action preferably automatically locates the compression tube on-center in relation to the hydraulic ram; no further adjustment beyond sliding the clamping plates inward and tightening the thumb nuts is necessary.

Optionally, a jack is actuated to raise the compression sub-assembly in the frame until the plunger contacts the hydraulic ram. The hydraulic pump is then actuated to drive the hydraulic ram to compress the tissue sample. Optionally, after compression of the sample is complete, a stop block below the compression tube is removed and the hydraulic ram is further driven to push the bottom plug out the bottom of the compression tube. Optionally, the bottom plug is then removed and the hydraulic ram is further driven to eject the compressed sample from the bottom of the compression tube. When the operator desires to remove the compression tube, the thumb nuts are loosened and the clamping plates are slid into the retracted position, after which the tube can be lifted off the riser plate.

In another preferred embodiment, the riser plate sub assembly of the frame of the pathologic staging compression apparatus is replaced by a drainage planum or platform. The bottom plug is permanently fixed onto the drainage planum in this embodiment. Unlike the riser plate sub-assembly, the drainage planum is preferably removed from the frame of the device during each use cycle.

In a method of preparing a tissue sample for pathologic staging, the user first removes the drainage planum from the frame of the device. The user then places the compression tube onto the drainage planum using the bottom plug affixed to the drainage planum. The tissue sample presoaked in acetone is then placed in the compression tube and preferably subject to an initial hand compression using a hand plunger. A shield is placed around the compression tube, its base resting on the surface of the drainage planum as part of a liquid fat containment system. Any fat extruded during the initial hand compression is drawn out of the drainage planum via an integrated drainage hole. Following initial hand compression, the drainage planum is then mounted onto the frame of the device. The drainage planum is preferably located on the frame using locating pins and held in place by fasteners, such as magnets (for example neodymium magnets). Removal of the sample from the device occurs by first removing the compression tube from the drainage planum. The sample is then ejected from the compression tube using a hand plunger.

In some embodiments, instead of tissue samples being placed directly into the compression tube, the tissue samples are placed in a disposable medical grade mesh bag/sleeve. The sleeve is then placed into the compression tube for processing. The use of mesh sleeves simplify cleaning of the compression tube. In other embodiments, a mesh disk/filter acts as the bottom of the compression tube.

The shape and size of the perforations in the compression tube may vary. For example, to accommodate the use of the mesh sleeves or disks, the perforations may be designed to work in conjunction with these mesh devices. In some embodiments, the width/diameter of the perforations may increase and the shape may change from circular perforations to slit-shaped perforations. These slit-shaped perforations may be arranged vertically along the circumference of the compression tube or arranged in some other manner, such as an involute spiral pattern. In embodiments not part of the invention with a mesh disk filter acting as the bottom of the compression tube, the compression tube lacks perforations entirely.

The hydraulic pump of the compression staging apparatus may be mounted directly onto the frame of the device or not mounted directly onto the frame of the device.

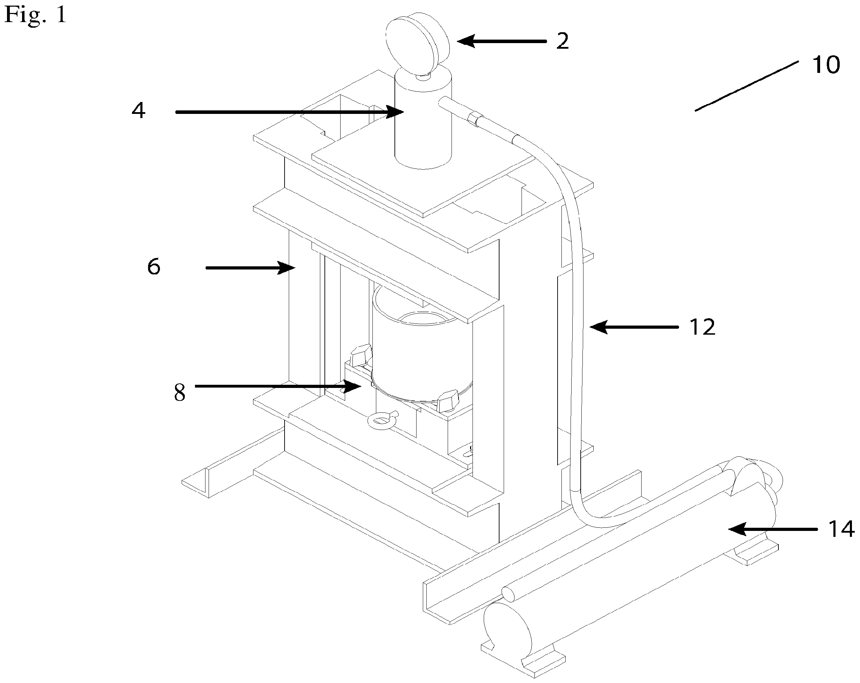

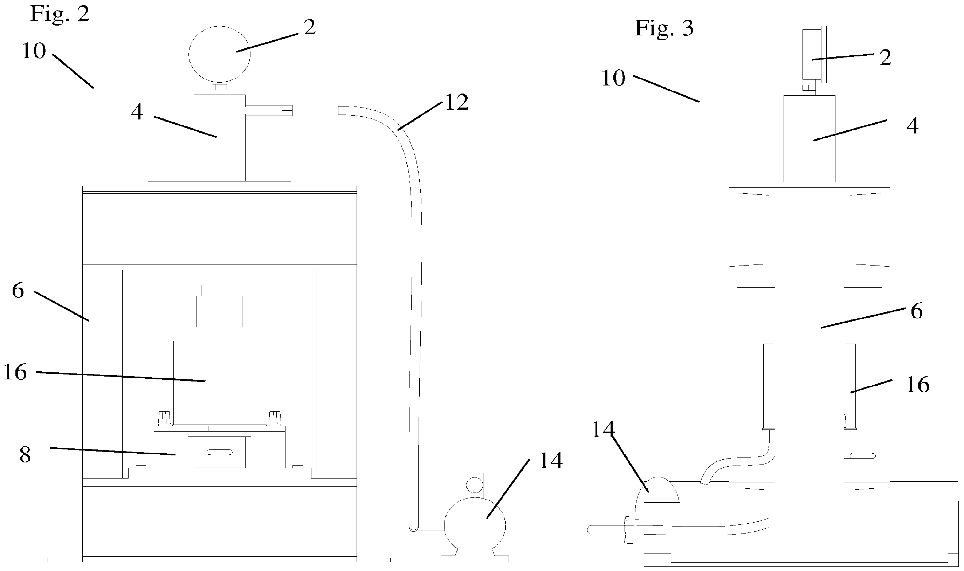

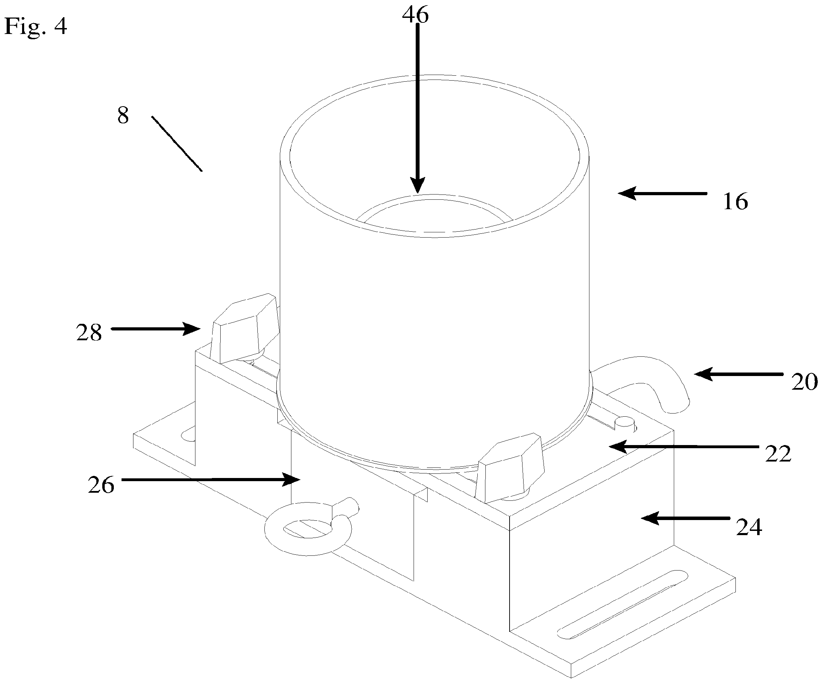

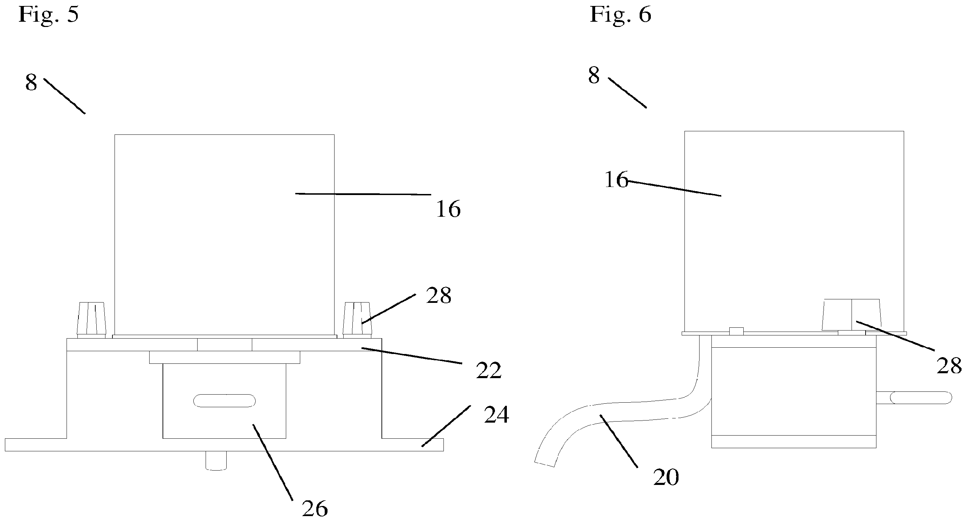

Referring to Fig. 1 through Fig. 6, the pathologic staging compression apparatus 10 includes a frame 6, a hydraulic ram 4, a hydraulic hose 12, a hydraulic pump 14, a pressure gauge 2, and a compression assembly 8. The frame 6 supports and positions the hydraulic cylinder 4 and the compression tube 46. The hydraulic ram 4 provides a compression force to compress a sample 9 in the compression assembly 8. The hydraulic hose 12 delivers hydraulic oil from the hydraulic pump 14 to the hydraulic ram 4. The hydraulic pump 14 actuates the hydraulic ram 4. The pressure gauge 2 registers and displays the hydraulic pressure.

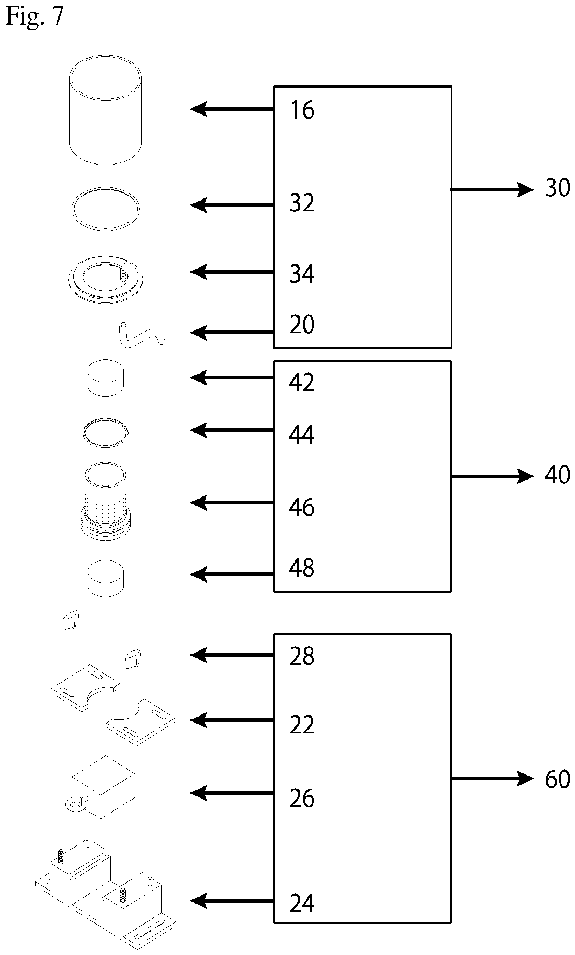

The compression assembly 8 includes a perforated compression tube 46, a fat containment tube or shield 16, a clamping plate 22, a riser plate 24, fasteners 28 (for example, thumb nuts), a stop block 26, and a drainage tube 20. The shield 16 is preferably made of a clear plastic material. In one preferred embodiment, the shield 16 is made of polycarbonate. Referring to Fig. 7, the compression assembly 8 includes a fat containment and drainage sub-assembly 30, a compression tube sub-assembly 40, and a riser plate sub-assembly 60.

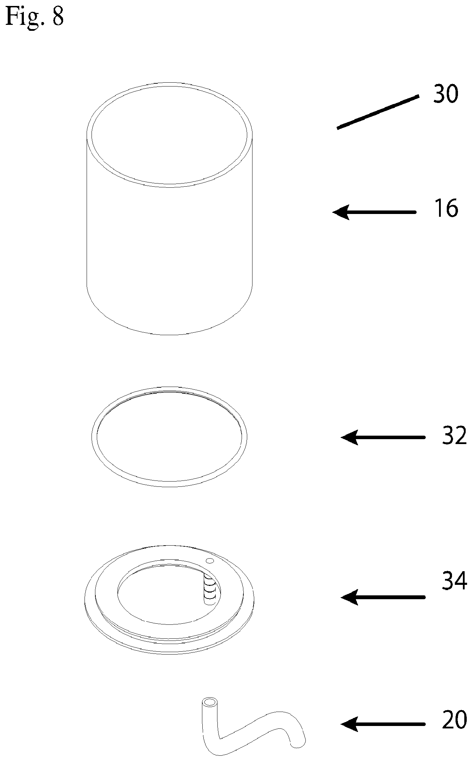

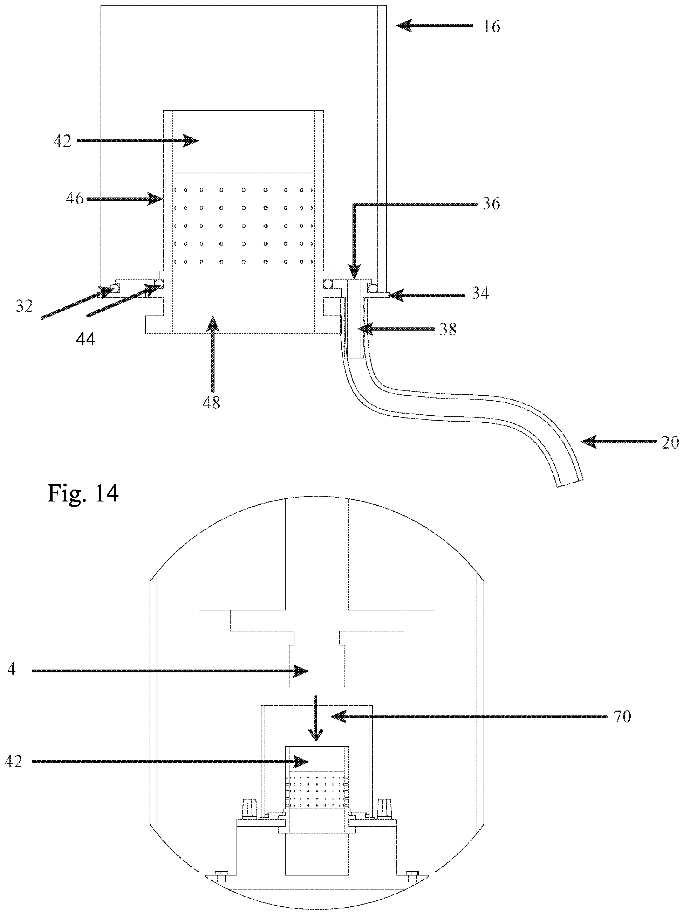

Referring to Fig. 8, the fat containment and drainage sub-assembly 30 includes the clear plastic shield 16 to contain the extruded liquid fat from the sample 9, a mounting plate 34 to support the clear plastic shield 16 and provide a drainage hole 36 (see Fig. 13) for drainage of the fat, an o-ring 32 to provide a liquid tight seal between the clear plastic shield 16 and the mounting plate 34, and the drainage tube 20 receiving the drained liquid fat from the drainage hole 36 in the mounting plate 34 and directing the drained liquid fat.

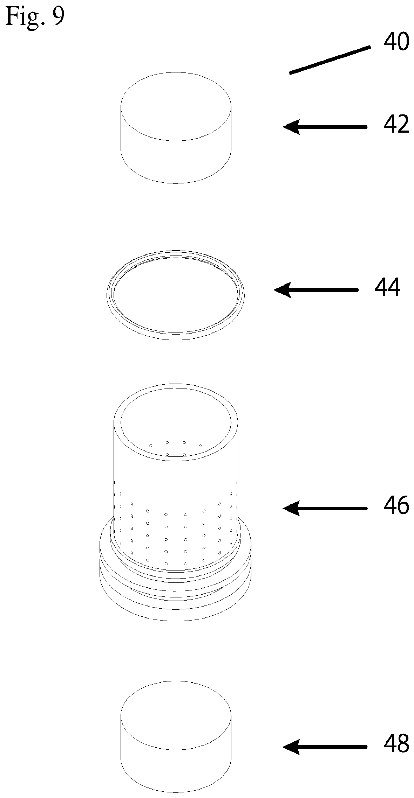

Referring to Fig. 9, the compression tube sub-assembly 40 includes a plunger 42 to compress the sample in the compression tube 46, an o-ring 44 to provide a liquid tight seal between the compression tube 46 and the mounting plate 34 for the clear plastic shield 16, the compression tube 46 in the form of a perforated 47 compression vessel 46 that contains the sample 9 and allows for extrusion of liquid fat through the perforations 47, and a bottom plug 48 to seal the opening at the bottom of the compression tube 46 during compression.

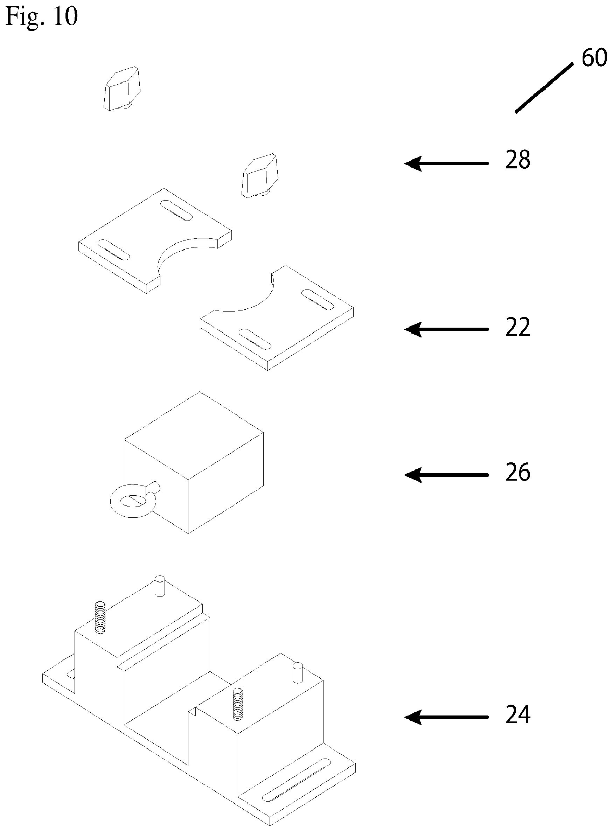

Referring to Fig. 10, the riser plate sub-assembly 60 includes a riser plate 24 to provide a platform for the compression tube 46, a stop block 26 to hold the bottom plug 48 in position during compression, clamping plates 22 to stabilize and secure the compression tube 46, and a pair of fasteners 28 (for example, thumb nuts) to lock the clamping plates 22 and thereby secure the compression tube 46.

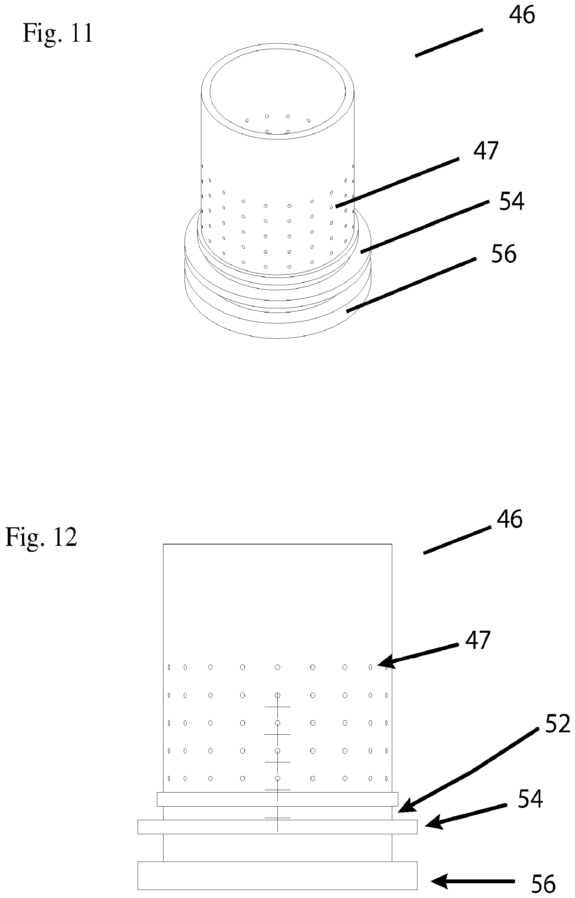

Referring to Fig. 11 and Fig. 12, liquid fat is extruded out small perforations 47 in the compression tube 46. In some embodiments, the compression tube 46 has an interior space in the range of 1.2 to 12 cubic inches (20 to 200 cubic centimeters) in volume to receive a sample. The volume of the compression tube 46 varies depending on the size of the sample being treated. The size and number of perforations are selected to be large enough for liquid fat to pass through them, but small enough that fibrous tissue cannot. In some embodiments, the perforations are about 3/64" (1.2 mm) in diameter. An o-ring seating groove 52 provides a seat for the o-ring 44 forming a seal between the compression tube 46 and the clear plastic shield 16. A flange 54 along the lower edge of the tube 46 allows for stabilization and alignment of the compression tube 46 when used in conjunction with the clamping plates 22. A secondary flange 56 allows for the mounting of the fat containment and drainage sub-assembly 30 onto the compression tube 46.

Referring to Fig. 13, the plunger 42 and the bottom plug 48 seal the top and bottom of the compression tube 46, respectively, to maintain the sample within the compression tube 46 during compression. The o-rings 44 seal the mounting plate 34 with respect to the clear plastic shield 16 and the compression tube 46 such that the liquid fat extruded from the compression tube 46 drains out the drainage hole 36. The drainage tube 20 mounts on a tubing barb 38 extending from the bottom of the mounting plate 34.

Referring to Fig. 14, the hydraulic ram 4 aligns with the opening in the top of the compression tube 46 and contacts and drives the plunger 42 downward to compress the sample 9 in the compression tube 46 using the hydraulic force generated by the hydraulic pump 14. When a predetermined compression has been achieved, the sample 9 is preferably ejected by removing the stop block 26 from below the bottom plug 48 and then actuating the hydraulic ram 4 farther in the direction of actuation 70 until the bottom plug 48 is driven out the bottom of the compression tube 46 and into the space previously occupied by the stop block 26, where it may be easily removed from the apparatus by the user. The compressed sample 9 is then driven out the bottom of the compression tube 46 and into the space previously occupied by the stop block 26, where it may be removed by hand either before or after sliding the clamping plates 22 to the retracted position and lifting the compression tube sub-assembly 40 off the riser plate 24.

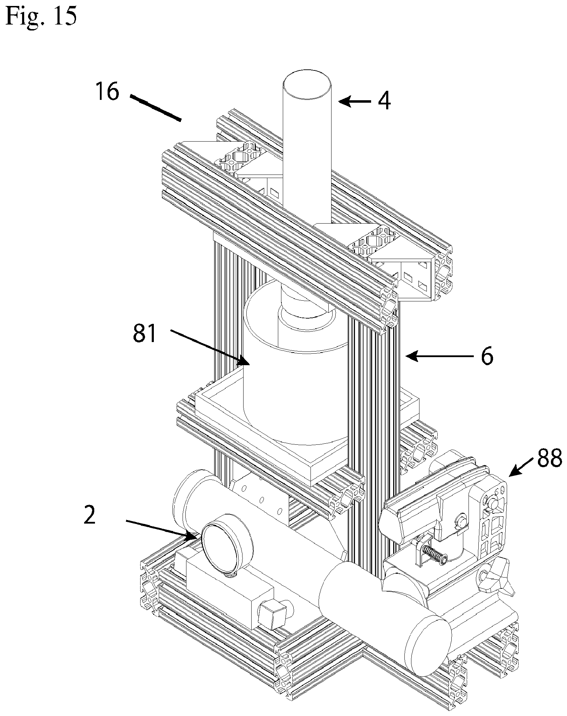

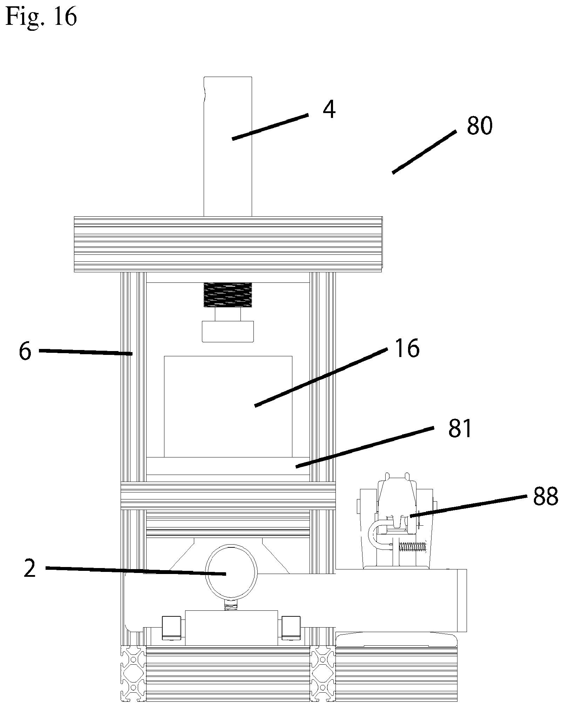

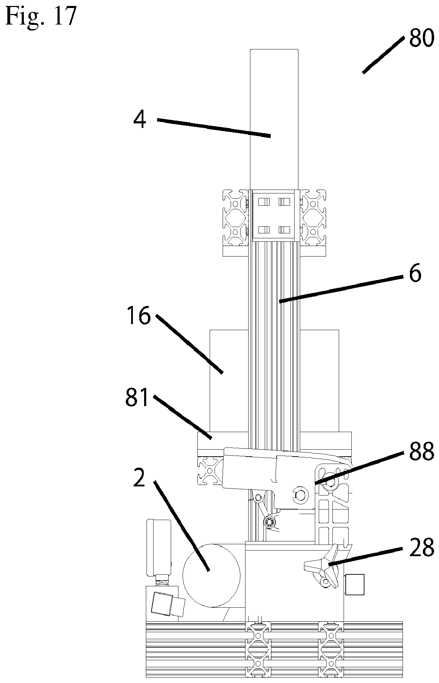

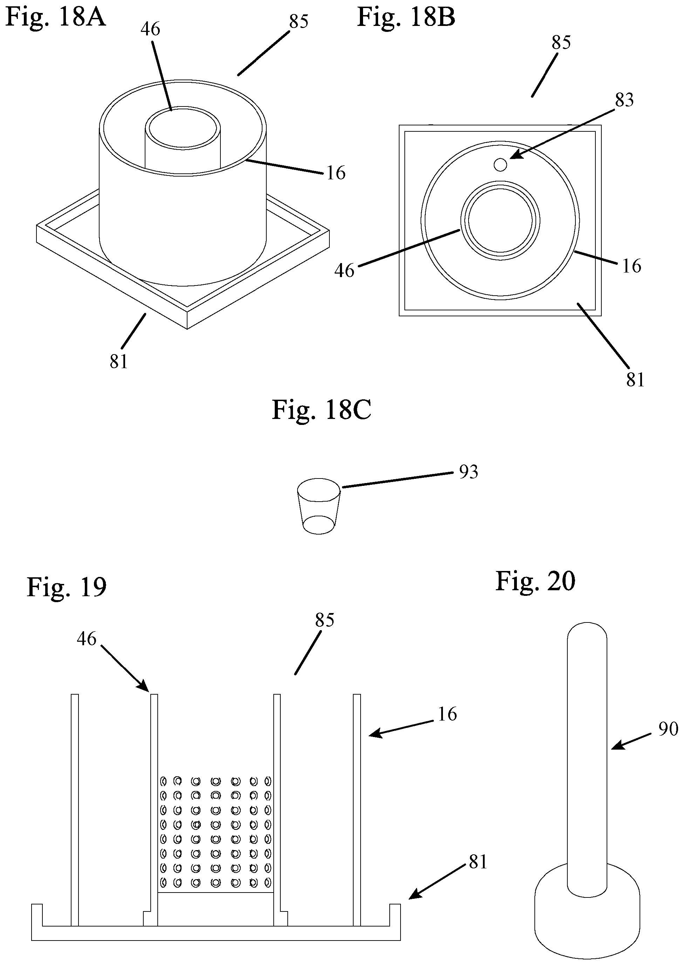

In an alternative embodiment, shown in Figs. 15-17, 22, 23A and 23B, the riser plate subassembly 60 shown in the embodiment of Figs. 1-14 is replaced by a removable drainage planum 81. In this embodiment, the bottom plug 82 (see Fig. 19) is permanently fixed onto the drainage planum 81. Unlike in embodiments with a riser plate subassembly 60, the drainage planum 81 is preferably designed to be removed from the frame 6 of the compression staging apparatus 80 during each use cycle.

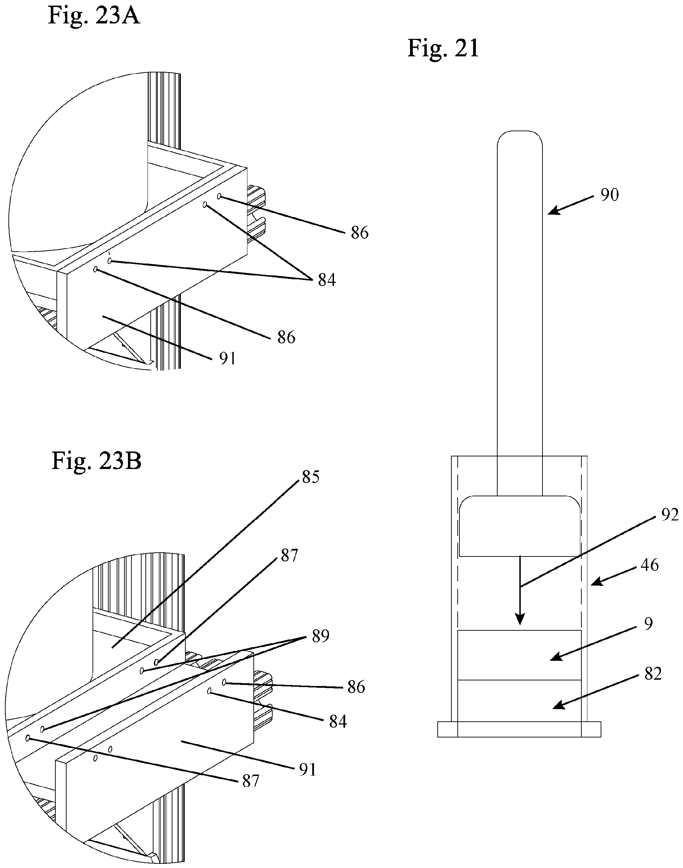

Details of the bottom plug 82, drainage planum 81 and compression tube 46 of the compression assembly 85 are shown in Figs. 18-21. During a given use cycle, the user first removes the drainage planum 81 and the bottom plug 82 from the frame 6 of the compression staging apparatus 80. The compression tube 46 is then placed onto the drainage planum 81 using the bottom plug 82 affixed to the drainage planum 81. The tissue sample 9 is then loaded into the compression tube 46 and preferably given an initial hand compression in the direction of the arrow 92 in Fig. 21 using a hand plunger 90. In some embodiments, the hand plunger is made of an acetal resin. Any fat extruded during an initial hand compression drains out of the drainage planum 81 via an integrated drainage hole 83, shown in Fig. 18B. A drainage plug 93, which is shaped to fit into and plug the drainage hole 83 when inserted into the drainage hole 83, is shown in Fig. 18C.

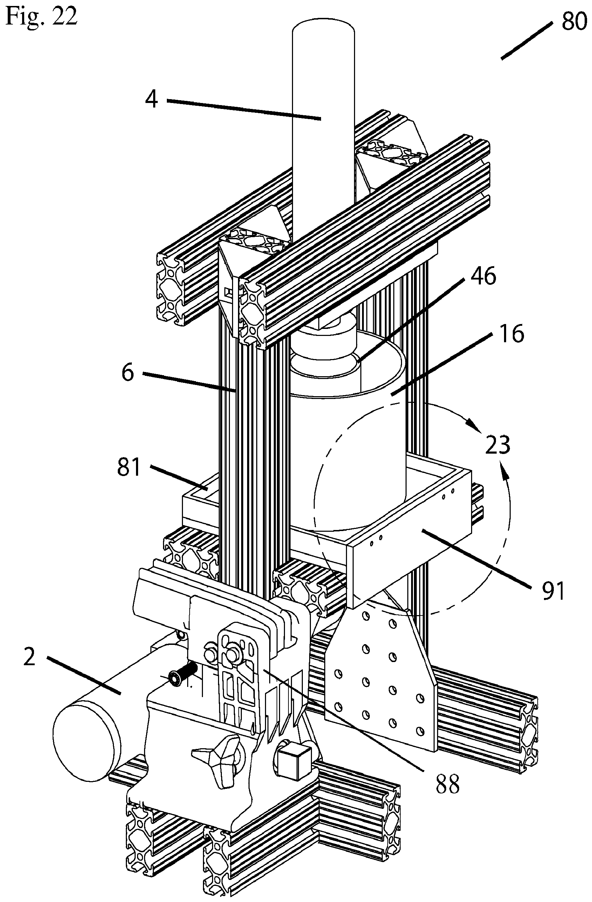

Following the initial hand compression (or as the primary compression step if the user decides not to perform an initial hand compression), the drainage planum 81 is then mounted onto the frame 6 of the compression staging apparatus 80. In some preferred embodiments, the drainage planum 81 is reversibly affixed to the frame 6 using locating pins 84 and locating pin holes 89 and held in place by magnets 86 and 87, for example neodymium magnets, as shown in Figs. 22, 23A and 23B. A planum alignment plate 91 aids in affixing the frame 6 to the drainage planum 81.

In the embodiment shown in Figs. 15-22, ejection of the sample occurs by first removing the compression tube 46 from the drainage planum 81. The sample 9 is then preferably ejected from the compression tube 46 using a hand plunger 90. In the embodiments shown in Figs. 1-14, the sample 9 is preferably ejected from the compression tube 46 using the stop block 26.

In the embodiments shown in Figs. 15-22, the shield 16 is placed around the compression tube 46 according to the invention with the base of the shield 16 resting on a surface of the drainage planum 81. In the embodiments shown in Figs. 1-14, the shield 16 that contains the spray from the extrusion of liquefied fat is preferably mounted directly onto the compression tube 46 using the mounting plate 34, as shown in Fig. 8.

In some embodiments, the hydraulic pump is not mounted directly on the device (for example in the apparatus 10 shown in Figs. 1-14). In alternative embodiments, the hydraulic pump 88 is mounted directly onto the frame 6 of the apparatus 80, as shown in Fig. 15.

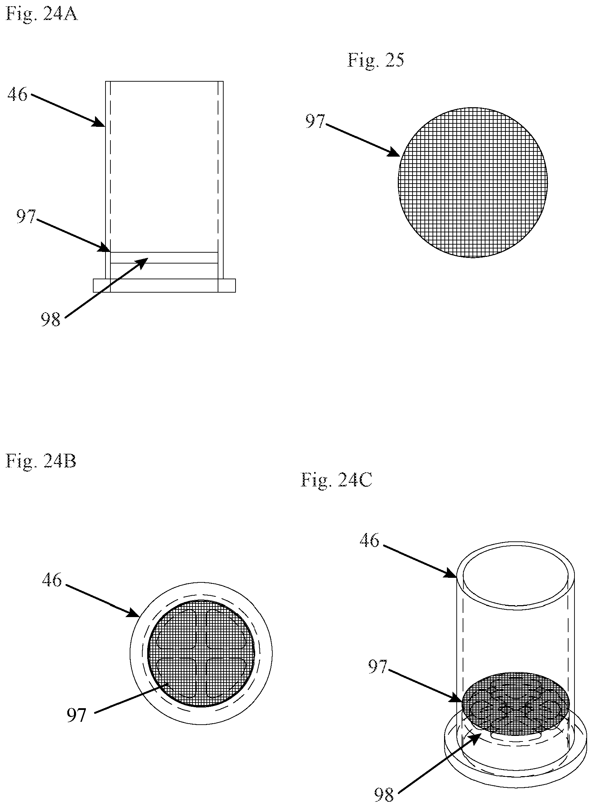

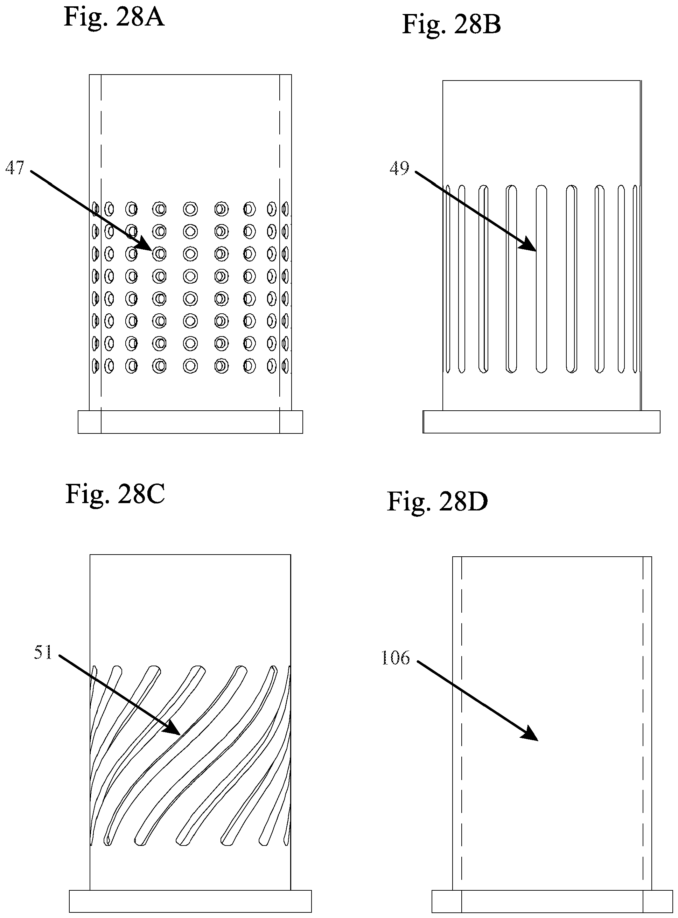

In another embodiment, the bottom plug 48, 82 is a mesh disk filter 97, as shown in Figs. 24 and 25. Using a mesh disk filter 97 for the bottom plug 48, 82 permits the fat to be released from the device through the bottom of the compression tube 46, in addition to through the perforations 47 in the compression tube 46. This permits a method not part of the invention, whereby the use of a compression tube that has no holes or perforations, as shown in Fig. 28D, is permitted. The perforation size of mesh disk 97 may vary. In some embodiments, the mesh size of the perforations in the mesh disk is between approximately 0.5 mm and 3 mm. In some embodiments, the mesh disk/filter 97 is a medical grade mesh filter disk, for example a metal mesh filter disk. The mesh disk/filter 97 includes a mesh disk support 98 to hold the mesh disk 97 in place in the compression tube 46.

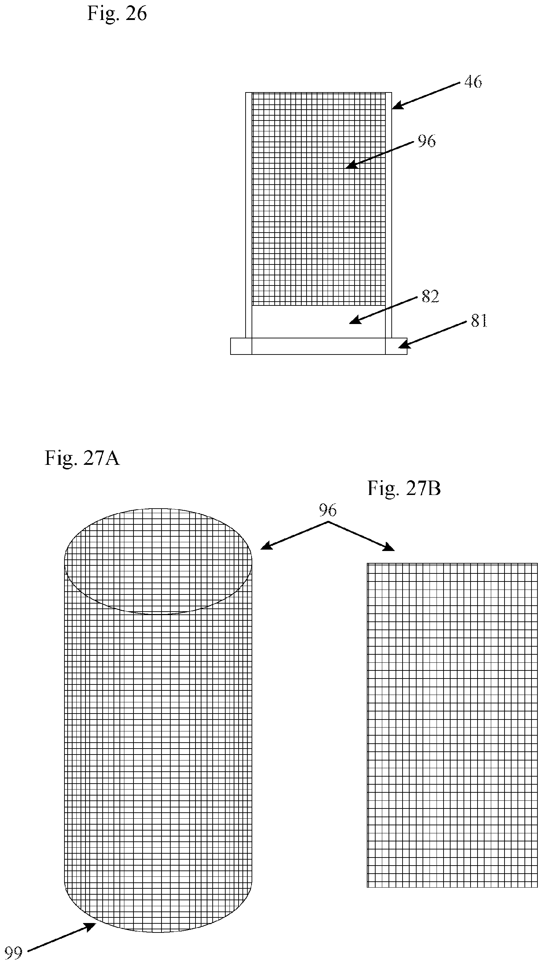

In the embodiments described above, tissue samples 9 are preferably placed directly into the compression tube 46 for processing. In alternative embodiments, shown in Figs. 26-27, the tissue sample 9 is placed into a disposal mesh bag/sleeve 96. The mesh size of the mesh bag 96 may vary. In some embodiments, the mesh size of the perforations for the mesh sleeve is between approximately 0.05 mm (5 microns) and 1 mm (1000 microns). In some embodiments, the mesh bag 96 is a disposable medical-grade mesh bag or sleeve.

In these embodiments, the mesh sleeve 96 in which the sample 9 has been placed is then placed within the compression tube 46 to contain the sample 9 during the compression process, as shown in Fig. 26. These embodiments simplify the cleaning of the compression tube 46. In some embodiments, the mesh sleeve 96 is a disposable medical-grade mesh bag or sleeve 96. The mesh sleeve 96 may include a mesh base 99. The mesh sleeve 96 may alternatively be used with the compression apparatus shown in Figs. 1-14.

While circular perforations 47 are shown in most of the figures, other shapes and patterns may alternatively used in any of the embodiments of the compression staging apparatuses described herein. For example, to accommodate the use of a mesh bag/sleeve or mesh disk filter with the compression tube 46, the shape and size of the perforations in the compression tube 46 may be altered.

Figs. 28A through 28D show different embodiments for the perforations of a compression tube. Fig. 28A shows circular perforations 47, as shown in the earlier figures. One example of a hole pattern is an 8 x20 hole pattern. Fig. 28B shows slot perforations 49. One example of a slot pattern is a 1 x 20 slot pattern. While the slot perforations 49 are arranged vertically in Fig. 28B, they may alternatively be arranged in another pattern. Fig. 28C shows spiral perforations 51. One example of a spiral pattern is a 1 x 14 spiral pattern.

Other geometric or free form shapes for the perforations could alternatively be used. The number of perforations, the arrangement of the perforations, the width of the perforations, and/or the diameter of the perforations using any of the shapes described above also may vary.

In some embodiments which are not part of the invention, the compression tube 106 has no perforations, as shown in Fig. 28D. This compression tube 106 could be used in combination with the mesh disk filter 97 shown in Figs. 24 and 25. In these embodiments, the fat is extruded from the bottom of the compression tube 106 through the mesh disk filter 97.

Although specific designs for the frame, the compression assembly, extruded fat handling, and sample ejection is shown in the figures, the frame, compression assembly, fat containment and drainage sub-assembly, or ejection assembly could be a different shape, material, size, configuration, or layout to perform the same function within the scope of the appended claims.

Although a hydraulic pump is shown as supplying the compression force, the compression force may alternatively be provided in any other manner, including, but not limited to, pneumatically, electrostatically, or mechanically. While hydraulic compression mechanisms are discussed herein, alternative compression mechanisms, including, but not limited to, linear actuators, motor driven screw jacks, pneumatic cylinders, solenoid cylinders, or arbor presses could alternatively be used.

Although the compression force is shown as being monitored by a pressure gauge, the compression force may alternatively be monitored by any other force monitoring apparatus appropriate for the type of compression force being used, including, but not limited to, a pressure sensor, a force sensor, or a load cell.

Automation may be introduced in the device, which complements the compression. In some embodiments, an automated control system directs the compression process by actuating and controlling the output of the hydraulic pump while monitoring the position of the force actuator (for example, a hydraulic ram) and monitoring the compression force to perform the compression under predetermined conditions. In some embodiments, the compression is done by the automated control system under predetermined compression force parameters to assure reproducibility between different samples. In a preferred embodiment, the parameters for the automated compression are selected for producing an optimum compressed sample for pathologic staging or other applications.

In some embodiments, the automated control system is integrated by way of a motor powering a force generator, which may include, but is not limited to, an electric hydraulic pump, a pneumatic/hydraulic pump, or a worm-gear driven screw jack. The motor is outfitted with a controller, which may be a pulse-width-modulation (PWM) style controller. After a relationship between the electrical current delivered to the motor and the mechanical force output of the motor is established, the controller is programmed to limit the maximum current delivered to the motor to a level that corresponds to the maximum desired ramming force. The maximum current/force in the system may be preset to a single fixed value or the system may allow the user to select a value from multiple present values or any value from within a spectrum of values bounded by a minimum and maximum value. In some embodiments, the control system includes one or more sensors that allow the system to respond in real time to sample parameters, including, but not limited to, sample density, sample viscosity, and sample volume.

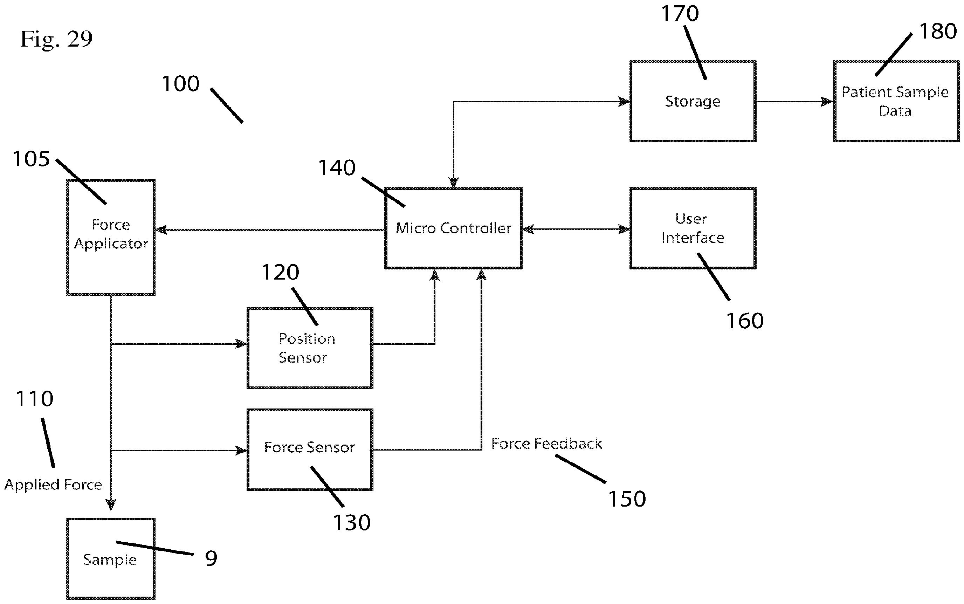

Fig. 29 shows a block diagram of an example of an automated control system 100 for the compression device. As shown in Fig. 29, the advanced control system 100 includes a microcontroller 140 which the user operates by means of a user interface 160. The user interface 160 may be any user interface including, but not limited to, a digital display or a series of buttons. The microcontroller 140 provides information according to user instructions to a force applicator 105. One example of a force applicator 105 is the hydraulic ram 4 discussed above. Other examples of force applicators 105 include, but are not limited to, a pneumatic ram, a screw jack, or any other force-applying mechanism. The force applicator 105 applies force to the sample 9 and this process is monitored in real time by both a position sensor 120, which detects the location of the force applicator 105, and a force sensor 130, which monitors the degree of force being applied 110 at any given moment. The information collected by these sensors 120, 130 feeds back 150 into the microcontroller 140, which uses this information to make adjustments to the operation of the force applicator 105 in accordance with user-generated settings. When the sample 9 has been compressed to the degree indicated by the user, the sensors 120, 130 signal to the microcontroller 140 that the use cycle is complete. The microcontroller 140 is also connected to a storage apparatus 170, which is designed to store and deliver preset user settings as well as record data about each use cycle. This sample data 180 is retrievable for purposes of quality control monitoring. In the case of the medical application of this device, the data is "patient" sample data, 180, but the sample data 180 could be any type of industry-specific sample data 180.

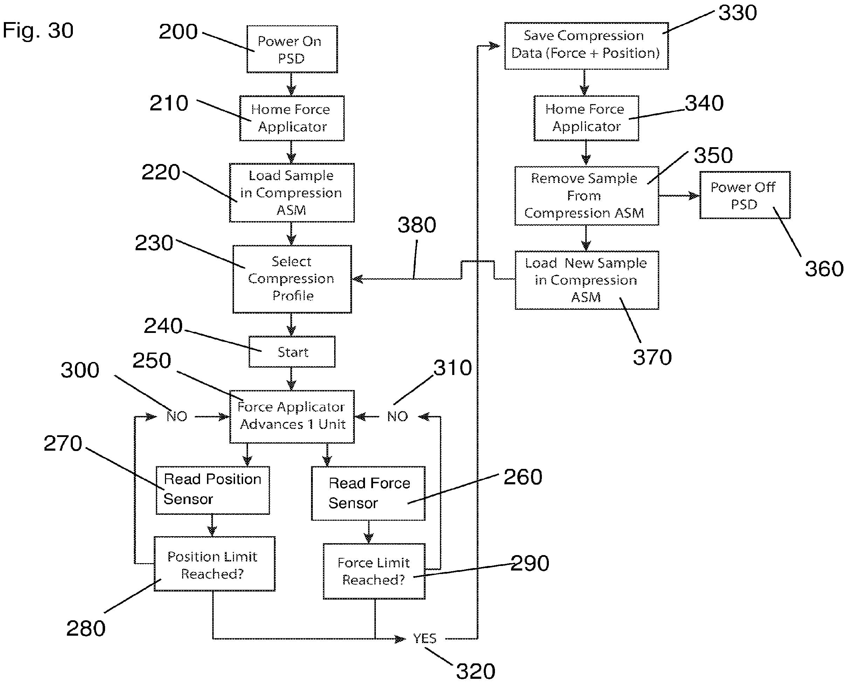

Fig. 30 shows a flow diagram of an example of a use cycle of the advanced control system 100. The use cycle is initiated by powering on the pathologic staging device (PSD) in step 200. This begins a process by which the force applicator 105 is returned to its home position in step 210. The sample 9 is then loaded in the compression assembly (ASM) and secured in place in step 220. The user then selects the compression profile, or settings, via the user interface160 in step 230. The user then starts the compression in step 240. This signals the force applicator 105 to advance one unit in step 250, simultaneously triggering the force sensor 130 and pressure sensor 140 to monitor the progress of the force applicator 105 in steps 260 and 270, respectively. As long as the user-defined thresholds (limits) for both position and force (280 and 290, respectively) are not reached in steps 300 and 310, respectively, the force applicator continues to advance 250. When either of these limits is reached in step 320, the microcontroller 140 halts the motion of the force applicator 105 and saves the force and position data from this compression cycle to the storage device 170 in step 330. The force applicator 105 is then retracted to the home position in step 340, after which the sample 9 is removed from the compression assembly in step 350. The next step is either to power down the unit (step 360) or load a new sample in the compression assembly (step 370) and repeat the process (step 380), beginning with the select compression profile step 230.

Although a pathologic staging compression apparatus has been used for staging of colorectal cancer and ovarian cancer, further use and adoption of the apparatus is expected to lead to additional diagnostic applications where separating tissues of different densities is advantageous.

While the compression apparatus is described herein for use on tissue samples for staging cancer, the compression device could alternatively used in any applications where fatty tissue needs to be separated. Some examples include gynecological, breast, and other areas of the body with fatty tissues. Other surgical disciplines where fatty tissue can be collected may also find the compression apparatus helpful to decrease time throughout the process of resection (including any type of surgical resection including, but not limited to, abdnominal resections) and pathologic staging. A surgical oncologist may change their process for surgical resection to incorporate the compression devices described herein. Using the compression apparatuses described herein on these types of tissues decreases specimen pathology testing time.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A method of preparing a tissue sample including fat and lymph nodes for pathologic staging using a pathologic staging compression device comprising a compression tube (46) having a cylindrical side wall defining a cylindrical space between a top end and a bottom open end, the cylindrical side wall having a plurality of through-holes (47, 49, 51), a bottom plug (48, 82) mounted in the bottom open end of the compression tube, and a cylindrical shield (16) located around the compression tube, the method comprising the steps of:
soaking the tissue sample in acetone to dissolve fat from the sample;
compressing the sample in the compression tube (46) of the pathologic staging compression device (10); and
controlling the compressing step so as to compress the sample to a predetermined degree.

2. The method of claim 1, wherein the pathologic staging compression device (10) further comprises a frame (6); a hydraulic ram (4) held by the frame (6) in alignment with the compression tube (46); a hydraulic pump (14) providing pressurized hydraulic fluid to the hydraulic ram (4); a pressure sensor measuring a hydraulic pressure of the pressurized hydraulic fluid; and wherein the compressing step comprises the substeps of:
aligning the hydraulic ram (4) with an opening in a top of the compression tube (46); and
actuating the hydraulic ram (4) to drive the hydraulic ram (4) into the cylindrical space and compress the sample in the cylindrical space between the hydraulic ram and the bottom plug.

3. The method of claim 1, wherein the step of controlling the compression step includes monitoring a compression force applied by monitoring the compression force using a force monitoring apparatus (130).

4. The method of claim 2, wherein the pathologic compression staging device further comprises a stop block (26) below the bottom plug, the method further comprises the step of ejecting the sample from the device by removing the stop block (26) from below the bottom plug (48) and actuating the hydraulic ram (4) in a direction of actuation until the bottom plug is driven out of the compression tube.

5. The method of claim 1, wherein the compression tube (46) has a mounting plate (34) connected to the cylindrical shield (16) and a drainage tube (20) extending from a hole in the mounting plate (34), the method further comprising containing fat removed from the sample during compression with the cylindrical shield (16) and draining the fat through the drainage tube (20).

6. The method of claim 1, further comprising the step of collecting the sample from the compression tube (46).

7. The method of claim 1, wherein the pathologic staging compression device further comprises a mesh sleeve (96) that fits into the compression tube and holds the sample.

8. The method of claim 1, further comprising hand compressing the sample in the compression tube (46) using a hand plunger (90) before the compression step.

9. The method of claim 1, wherein the the bottom plug is a mesh disc filter (97) at a bottom of the compression tube and the fat passes out of the compression tube through the filter.

10. The method of claim 1, wherein the compressing step is performed by using a force actuator (4, 105) to apply a compression force to the sample and wherein the step of controlling the compression step is performed by an automated control system that actuates and controls an output of the force actuator.

11. Use of a pathologic staging device comprising a compression tube (46) having a cylindrical side wall defining a cylindrical space between a top end and a bottom open end, the cylindrical side wall having a plurality of through-holes (47, 49, 51), a bottom plug (48, 82) mounted in the bottom open end of the compression tube, and a cylindrical shield (16) located around the compression tube, the device further comprising either a force monitoring apparatus (130) or a force actuator (4, 105) configured to apply a compression force and controlled by an automated control system configured to control an output of the force actuator to perform the method according to any of claims 3 or 10.

## Patentansprüche

1. Verfahren zum Herstellen einer Gewebeprobe, die Fett und Lymphknoten beinhaltet, für die pathologische Stadieneinteilung unter Verwendung einer Kompressionsvorrichtung für die pathologische Stadieneinteilung, umfassend ein Kompressionsrohr (46) mit einer zylindrischen Seitenwand, die einen zylindrischen Raum zwischen einem oberen Ende und einem unteren offenen Ende definiert, wobei die zylindrische Seitenwand eine Mehrzahl von Durchgangslöchern (47, 49, 51) aufweist, einem unteren Stopfen (48, 82), der in dem unteren offenen Ende des Kompressionsrohrs montiert ist, und einer zylindrische Abschirmung (16), die sich um das Kompressionsrohr herum befindet, wobei das Verfahren die Schritte umfasst:
Einweichen der Gewebeprobe in Aceton, um das Fett aus der Probe zu lösen;
Komprimieren der Probe in dem Kompressionsrohr (46) der Kompressionsvorrichtung (10) für die pathologische Stadieneinteilung, und
Steuern des Kompressionsschritts, um die Probe bis zu einem vorbestimmten Grad zu komprimieren.

2. Verfahren nach Anspruch 1, wobei die Kompressionsvorrichtung (10) für die pathologische Stadieneinteilung ferner einen Rahmen (6); einen Hydraulikkolben (4), der von dem Rahmen (6) in Ausrichtung an dem Kompressionsrohr (46) gehalten wird, eine Hydraulikpumpe (14), die dem Hydraulikkolben (4) ein unter Druck stehendes Hydraulikfluid bereitstellt; einen Drucksensor, der einen Hydraulikdruck des unter Druck stehenden Hydraulikfluids misst; und wobei der Kompressionsschritt die Teilschritte umfasst:
Ausrichten des Hydraulikkolbens (4) an einer Öffnung in einer Oberseite des Kompressionsrohrs (46); und
Betätigen des Hydraulikkolbens (4), um den Hydraulikkolben (4) in den zylindrischen Raum zu treiben und die Probe in dem zylindrischen Raum zwischen dem Hydraulikkolben und dem unteren Stopfen zu komprimieren.

3. Verfahren nach Anspruch 1, wobei der Schritt des Steuerns des Kompressionsschritts das Überwachen einer aufgebrachten Kompressionskraft durch Überwachen der Kompressionskraft unter Verwendung einer Kraftüberwachungseinrichtung (130) beinhaltet.

4. Verfahren nach Anspruch 2, wobei die Kompressionsvorrichtung für die pathologische Stadieneinteilung ferner einen Anschlagblock (26) unterhalb des unteren Stopfens umfasst, wobei das Verfahren ferner den Schritt des Ausstoßens der Probe aus der Vorrichtung durch Entfernen des Anschlagblocks (26) von unterhalb des unteren Stopfens (48) und Betätigen des Hydraulikkolbens (4) in einer Betätigungsrichtung umfasst, bis der untere Stopfen aus dem Kompressionsrohr herausgetrieben wird.

5. Verfahren nach Anspruch 1, wobei das Kompressionsrohr (46) eine Montageplatte (34), die mit der zylindrischen Abschirmung (16) verbunden ist, und ein Drainagerohr (20) aufweist, das sich von einem Loch in der Montageplatte (34) aus erstreckt, wobei das Verfahren ferner das Enthalten von aus der Probe während der Kompression mit der zylindrischen Abschirmung (16) entferntem Fett und Ablassen des Fetts durch das Drainagerohr (20) umfasst.

6. Verfahren nach Anspruch 1, ferner umfassend den Schritt des Entnehmens der Probe aus dem Kompressionsrohr (46).

7. Verfahren nach Anspruch 1, wobei die Kompressionsvorrichtung für die pathologische Stadieneinteilung ferner eine Netzhülse (96) umfasst, die in das Kompressionsrohr passt und die Probe hält.

8. Verfahren nach Anspruch 1, das ferner das manuelle Komprimieren der Probe in dem Kompressionsrohr (46) unter Verwendung eines Handdruckkolbens (90) vor dem Kompressionsschritt umfasst.

9. Verfahren nach Anspruch 1, wobei der untere Stopfen ein Netzscheibenfilter (97) an einem Boden des Kompressionsrohrs ist und das Fett durch das Filter aus dem Kompressionsrohr passiert.

10. Verfahren nach Anspruch 1, wobei der Kompressionsschritt unter Verwendung eines Kraftaktuators (4, 105) durchgeführt wird, um eine Kompressionskraft auf die Probe aufzubringen, und wobei der Schritt des Steuerns des Kompressionsschritts durch ein automatisiertes Steuersystem durchgeführt wird, das einen Ausgang des Kraftaktuators betätigt und steuert.

11. Verwendung einer Vorrichtung für die pathologische Stadieneinteilung, umfassend ein Kompressionsrohr (46) mit einer zylindrischen Seitenwand, die einen zylindrischen Raum zwischen einem oberen Ende und einem unteren offenen Ende definiert, wobei die zylindrische Seitenwand eine Mehrzahl von Durchgangslöchern (47, 49, 51) aufweist, einem unteren Stopfen (48, 82), der in dem unteren offenen Ende des Kompressionsrohrs montiert ist, und einer zylindrischen Abschirmung (16), die sich um das Kompressionsrohr herum befindet, wobei die Vorrichtung ferner entweder eine Kraftüberwachungseinrichtung (130) oder einen Kraftaktuator (4, 105) umfasst, der dazu konfiguriert ist, eine Kompressionskraft aufzubringen und durch ein automatisiertes Steuersystem gesteuert wird, das dazu konfiguriert ist, einen Ausgang des Kraftaktuators zu steuern, um das Verfahren nach einem der Ansprüche 3 oder 10 durchzuführen.

## Revendications

1. Méthode de préparation d'un échantillon de tissu incluant des graisses et des ganglions lymphatiques pour effectuer une stadification pathologique au moyen d'un dispositif de compression pour stadification pathologique qui comprend un tube de compression (46) pourvu d'une paroi latérale cylindrique définissant un espace cylindrique entre une extrémité supérieure et une extrémité inférieure ouverte, la paroi latérale cylindrique présentant une pluralité de trous débouchants (47, 49, 51), un bouchon inférieur (48, 82) monté sur l'extrémité inférieure ouverte du tube de compression et un bouclier cylindrique (16) situé autour du tube de compression, la méthode comprenant les étapes suivantes :
imbibition de l'échantillon de tissu dans de l'acétone pour dissoudre les graisses contenues dans l'échantillon ;
compression de l'échantillon dans le tube de compression (46) du dispositif de compression pour stadification pathologique (10) ; et
contrôle de l'étape de compression de manière à comprimer l'échantillon jusqu'à un degré prédéfini.

2. Méthode de la revendication 1, où le dispositif de compression pour stadification pathologique (10) comprend également un cadre (6) ; un pilon hydraulique (4) maintenu en alignement avec le tube de compression (46) par le cadre (6) ; une pompe hydraulique (14) qui fournit un liquide hydraulique pressurisé au pilon hydraulique (4) ; un capteur de pression qui mesure la pression hydraulique du liquide hydraulique pressurisé ; et où l'étape de compression comprend les sous-étapes suivantes :
alignement du pilon hydraulique (4) avec une ouverture située dans une partie haute du tube de compression (46) ; et
actionnement du pilon hydraulique (4) pour amener le pilon hydraulique (4) dans l'espace cylindrique et comprimer l'échantillon entre le pilon hydraulique et le bouchon inférieur dans l'espace cylindrique.

3. Méthode de la revendication 1, où l'étape de contrôle de l'étape de compression inclut un suivi de la force de compression appliquée en suivant la force de compression au moyen d'un appareillage de suivi de la force (130).

4. Méthode de la revendication 2, où le dispositif de compression pour stadification pathologique comprend également un sabot d'arrêt (26) en dessous du bouchon inférieur, la méthode comprenant en outre l'étape qui consiste à éjecter l'échantillon du dispositif en retirant le sabot d'arrêt (26) d'en dessous du bouchon inférieur (48) et à actionner le pilon hydraulique (4) dans une direction d'actionnement jusqu'à ce que le bouchon soit expulsé du tube de compression.

5. Méthode de la revendication 1, où le tube de compression (46) est pourvu d'une plaque de montage (34) connectée au bouclier cylindrique (16) et d'un tube de drainage (20) qui se prolonge à partir d'un orifice situé dans la plaque de montage (34), la méthode comprenant en outre le confinement, par le bouclier cylindrique (16), des graisses évacuées de l'échantillon lors de la compression et le drainage des graisses par le biais du tube de drainage (20).

6. Méthode de la revendication 1 comprenant en outre l'étape qui consiste à recueillir l'échantillon du tube de compression (46).

7. Méthode de la revendication 1, où le dispositif de compression pour stadification pathologique comprend également un manchon à mailles (96) qui s'insère dans le tube de compression et maintient l'échantillon en place.

8. Méthode de la revendication 1 comprenant en outre une compression manuelle de l'échantillon dans le tube de compression (46) au moyen d'un piston manuel (90) avant l'étape de compression.

9. Méthode de la revendication 1, où le bouchon inférieur est un filtre à mailles en forme de disque (97) situé au fond du tube de compression, et où les graisses sont évacuées du tube de compression au travers du filtre.

10. Méthode de la revendication 1, où l'étape de compression est effectuée en utilisant un actionneur de force (4, 105) pour appliquer une force de compression sur l'échantillon, et où l'étape de contrôle de l'étape de compression est effectuée par un système de contrôle automatisé qui actionne et contrôle une puissance de sortie de l'actionneur de force.

11. Utilisation d'un dispositif pour stadification pathologique comprenant un tube de compression (46) pourvu d'une paroi latérale cylindrique définissant un espace cylindrique entre une extrémité supérieure et une extrémité inférieure ouverte, la paroi latérale cylindrique présentant une pluralité de trous débouchants (47, 49, 51), un bouchon inférieur (48, 82) monté sur l'extrémité inférieure ouverte du tube de compression et un bouclier cylindrique (16) situé autour du tube de compression, le dispositif comprenant également soit un appareil de suivi de la force (130), soit un actionneur de force (4, 105) configuré pour appliquer une force de compression et contrôlé par un système de contrôle automatisé configuré pour contrôler une puissance de sortie de l'actionneur de force afin d'effectuer la méthode selon l'une quelconque des revendications 3 ou 10.
